# EUROPEAN PATENT APPLICATION

(11) **EP 0 690 335 A1**
(43) Date of publication of application: **03.01.1996**
(21) Application number: 95304414.6
(22) Date of filing: 23.06.1995
(51) Int. Cl.: G03B 21/26, G03B 21/52

(54) **Apparatus for display of subtitles during the screening of a motion picture**

(30) Priority: 30.06.1994 US 269418
(71) Applicant: DISCOVISION ASSOCIATES, Irvine, CA 92714 (US)
(72) Inventor: Gregg, David Paul, Culver City, California 90232-2417 (US)
(74) Representative: Hale, Peter

(57) **Abstract**

The present invention is an apparatus for displaying subtitles in connection with a motion picture. The apparatus includes a reader (24), which reads information from non-image areas (14) of a film print (10), and a memory device (28) which stores the organisation and content information for subtitles to be displayed. The apparatus further includes a controller (26) which recovers organisation and content information from the memory device (28) for subtitles corresponding to the information read from the film print (10), and directs a projector means to display the subtitle. The projector means may comprise a slide projector (30-1) with a liquid crystal slide (30-2) for transmitting light corresponding to the information for the subtitle. The controller (26) may include a video disc, and the memory device (28), which may contain a plurality of languages, may be a video disc.

## Description

### 1. Field of the Invention

This invention relates to exhibition of motion pictures, and in particular to the display of subtitles.

### 2. Description of the Background Art

Although the worldwide market for motion pictures requires multiple languages, a typical motion picture contains only one spoken language. During the screening of motion pictures, therefore, there is frequently the need to display subtitles along with the images. The subtitles contain a translation of the sound track of the motion picture, and must be synchronized with the sound track and the images.

Generally, the subtitles are imprinted on successive frames of the film print. The subtitles are thus projected onto the screen along with the images. Through this process, the subtitles are inherently synchronized with the sound track and the images.

This technique is particularly time-consuming and expensive. Placing subtitles on the frames requires a substantial amount of laboratory time, and a given film print must then be dedicated permanently to the selected language. A film print cannot be used for other than the language of the subtitle because the subtitles are a permanent part of the film print. In addition, the operation is particularly long because a feature-length motion picture usually requires between 700 and 1200 subtitles.

There are other techniques for providing motion pictures with subtitles. For example, one technique employs a second film print having only subtitles, which projects the subtitles simultaneously with the original film print. This technique is particularly complicated because it requires two projectors, two film prints of the same length, and synchronization of the two projectors. Such synchronization is difficult to maintain during a single screening and particularly difficult to maintain for successive screenings.

U. S. Patent 4,673,266 to Fiumi discloses a subtitling system wherein a film print is provided with coded signals which determine the organization and content of a given subtitle phrase. A microprocessor detects and decodes the coded signals, reads a corresponding subtitle from a mass-memory device, and displays the subtitle on a screen.

U. S. Patent 4,859,994 to Zola et al. discloses a subtitling system wherein subtitle data is encoded on a film strip. The subtitle data is read, decoded, and sent to a microprocessor circuit, which generates alphanumeric characters on a cross-polarized liquid crystal display.

U. S. Patent 4,613,207 to Fergason discloses a liquid crystal image forming projector in which the light from the liquid crystal display is selectively scattered or transmitted by respective portions of the display. The patent discloses that such a display may comprise a slide.

The above subtitling techniques have proven generally adequate. However, there is a need for a less expensive, less burdensome technique.

The apparatus of the present inventions allow a fast, simple, economical, and flexible preparation of a subtitled motion picture.

According to a first aspect of the invention, a reader reads the information contained in a track on film print. A controller then decodes the information, if necessary, and recovers from a memory device the organization and content for a subtitle corresponding to the point on the film print where that information is located. The controller then directs a projector means to display the subtitle information recovered from the memory device onto or near a display screen where the motion picture images from the film print are displayed.

According to another aspect of the invention, the reader reads the SMPTE time codes near the beginning of the screening of the motion picture, and the controller synchronizes an internal timer with those codes. As the screening progresses, the controller recovers from a memory device the organization and content for a subtitle corresponding to the point on the film print represented by the timer readings. The controller then directs a projector means to display the subtitle information recovered from the memory device onto or near the display screen where the motion picture images are displayed. Because this aspect of the present invention relies on SMPTE time codes, which currently are used for synchronization, the subtitle information displayed are inherently synchronized with the images.

The reader described herein may be separate from or integral with the film projector used for displaying the images of the motion picture. The projector means used for displaying the subtitle information is preferably a slide projector adapted to receive a liquid crystal slide.

This technique allows a uniform film print to be released worldwide. Therefore, all replication of the film print may be done from the same master print. Furthermore, this technique does not require any information to be placed on the film print, other than information which current practice already places on film prints. Thus, the release of a film will not be delayed pending the addition of information to enable the subtitling system to function.

Because the film print is uniform and both the organization and content of the subtitles are carried on the memory device, changing languages is accomplished by changing memory devices. In addition, this technique allows the same print to be used for languages which print horizontally and those which print vertically. In the preferred embodiment, the controller includes a video disc player and the memory device comprises a video disc. Replication of the memory device, then, is simple and inexpensive by comparison, and may be done in each country or region instead of in the film laboratory prior to release of the film.

Other aspects of the invention will become apparent from the following description with reference to the drawings.

FIGURE 1 is a generalized schematic diagram of the invention.

FIGURE 2 is a generalized view of a slide projector.

FIGURE 3 is a cross-sectional view of the slide projector taken along line 3--3 of FIGURE 2.

FIGURE 4 is a generalized view of several embodiments of coded information contained on the film print.

FIGURE 5 is a generalized representation of the information stored on the memory device.

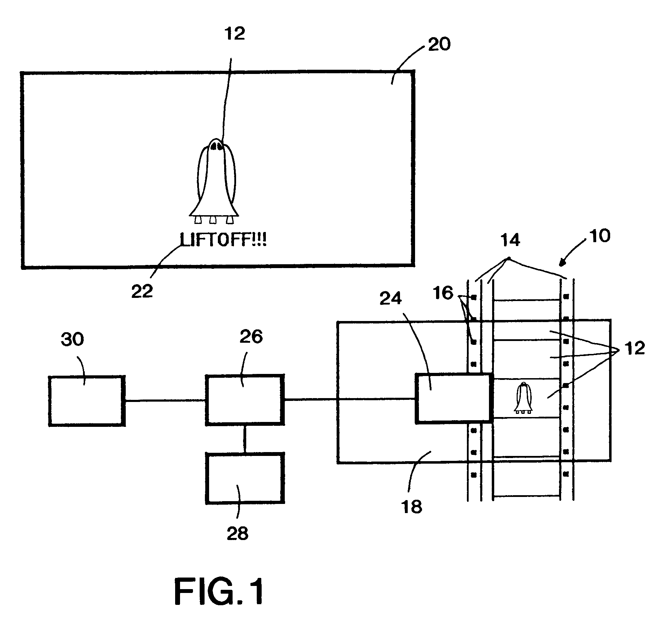

Referring to exemplary Figure 1, there is shown a film print 10 containing images 12 and containing non-image areas 14 extending longitudinally along each edge of the film print 10. The non-image areas 14 may contain sprocket holes 16. The film print 10 passes through a film projector 18, which projects the images 12 onto a display screen 20 for viewing by an audience. In accordance with the invention, a subtitle 22 corresponding to the image 12 is projected onto or near the display screen 20 for viewing by the audience.

In accordance with the invention, during normal screening of the motion picture, the film print 10 also passes through a reader 24. The reader 24 detects and reads coded information (not shown) from a non-image area 14 on the film print 10. The reader 24 then passes the coded information to a controller 26. Based on the coded information, the controller 26 recovers information from a memory device 28. The information recovered contains the organization and content information for the subtitle 22 corresponding to the image 12 to be projected onto or near the display screen 20. The controller 26 then directs a projector means 30 to project the subtitle 22 onto or near the display screen 20 according to the information recovered from the memory device 28.

The film projector 18 may be of a standard type currently used in movie theaters, with the reader 24 located outside the film projector 18. For this aspect of the invention, either the reader 24 or the controller 26 must include a delay circuit (not shown) to allow synchronization of the subtitle 22 with its corresponding image 12. Alternatively, the film projector 18 may be modified to contain the reader 24, thus obviating the need for any delay circuit. Such modifications or such a delay circuit would be well within the ability of one skilled in the art.

The memory device 28 may be any direct access or sequential access device capable of storing information for 700 to 1200 subtitles 22. In the preferred embodiment, the controller 26 includes a video disc player (not shown), as described in U. S. Patent Reissue 32,051 to Ludwig Ceshkovsky and Wayne Dakin, and the memory device 28 comprises a video disc, as described in U. S. Patent 4,819,223 or U. S. Patent 4,893,297, both to David Paul Gregg. In addition, the memory device 28 may contain information for subtitles 22 in more than one language, and these multiple subtitles 22 may be displayed either selectively or concurrently.

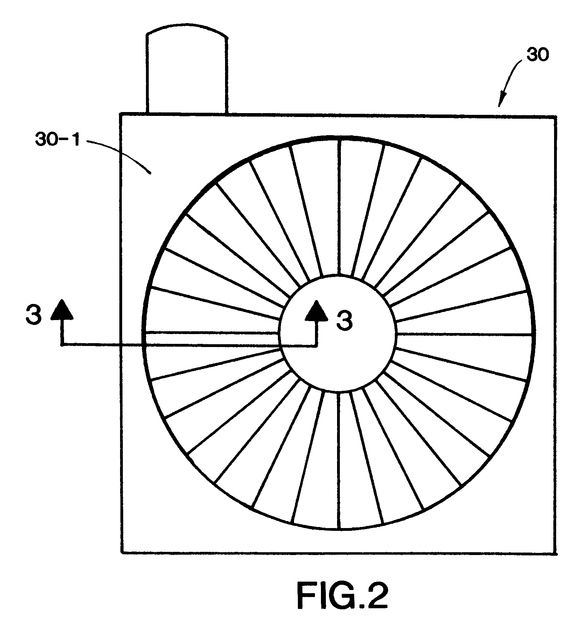

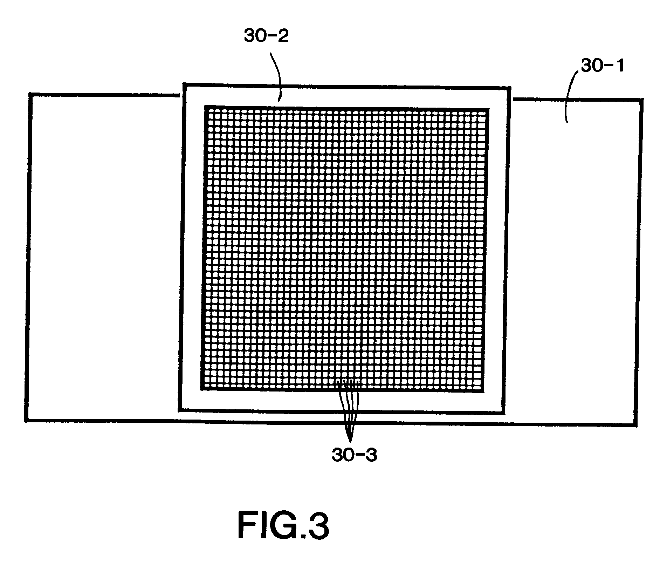

Referring to exemplary Figures 2 and 3, there is shown the preferred embodiment of the projector means 30. A slide projector 30-1 is adapted to receive a slide 30-2 containing liquid crystal. The liquid crystal is arranged into elements 30-3, each of which independently may selectively transmit, scatter, or absorb light from the slide projector 30-1. The slide 30-2 receives signals from the controller 26 over a control line (not shown). The signals direct each of the elements 30-3 to independently transmit, scatter, or absorb light such that the light from the slide projector 30-1 transmitted through the slide 30-2 displays the subtitle 22 according to the organization and content information corresponding to the subtitle 22 recovered from the memory device 28 by the controller 26.

The operation of the slide projector 30-1 in conjunction with the slide 30-2 containing liquid crystal is described in U. S. Patent 4,613,207 to Fergason, and would be well known to one skilled in the art. Preferably, the slide projector 30-1 is adapted to continually project light, which is transmitted, scattered, or absorbed by the elements 30-3 in the slide 30-2. Also, in the preferred embodiment the slide projector 30-1 projects either white or yellow light, and yellow light is preferred to increase the legibility of the subtitles 22 projected onto or near the display screen 20.

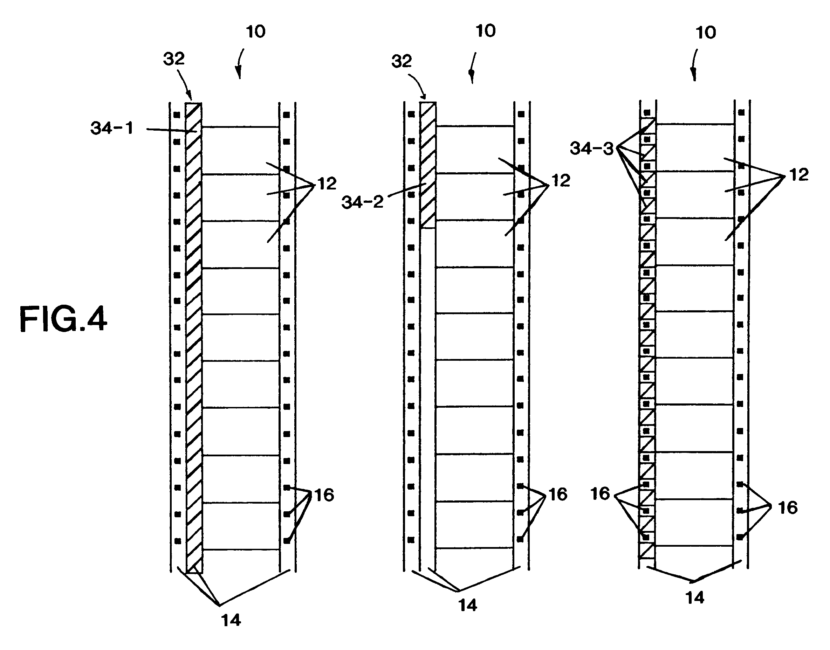

Referring to exemplary Figure 4, there are shown several configurations of the film print 10 adaptable for use with the present invention. In Line A of Figure 4, there is shown a film print 10 containing images 12 and non-image areas 14. The non-image areas 14 may contain sprocket holes 16. In addition, a non-image area 32 not containing sprocket holes 16 contains an information track 34-1, which extends substantially the entire length of the film print 10.

The information track 34-1 may comprise a standard audio soundtrack placed on the film print 10. In operation, a standard film projector 18 reads this standard audio soundtrack to provide sound which, because the soundtrack is placed on the film print 10 with the images 12, is inherently synchronized with the images 12 to be displayed. A modification to the film projector 18 would allow this audio information to be passed to the controller 26. Such a modification would be well known to those skilled in the art. The information for each subtitle 22 stored on the memory device 28 may be indexed by a representation of a unique sound occurring on the standard audio soundtrack only when the particular subtitle 22 is to be displayed. The controller 26 includes a decoder (not shown), which decodes each sound from the soundtrack, and the controller 26 compares each to the entire list of representations of such sounds to determine whether and for which subtitle 22 to recover information from the memory device 28.

Alternatively, the information for each subtitle 22 stored on the memory device 28 may be organized sequentially and indexed by a representation of a unique sound occurring on the standard audio soundtrack only when the next subtitle 22 is to be displayed. The controller 26 includes a decoder (not shown), which decodes each sound from the soundtrack, and the controller 26 compares each to the next representation of such sounds to determine when to recover the next information from the memory device 28.

In the preferred embodiment, the information track 34-1 comprises an audio synchronization track in place of the standard audio soundtrack. Such an audio synchronization track has been used on recent motion pictures such as "Jurassic Park" and "The Flintstones." In conjunction with these motion pictures, the audio soundtrack was contained on a video disc, and the information track 34-1 was used to synchronize the display of the images 12 by the film projector 10 with the soundtrack read by a video disc player. Adapting that system for operation with the present invention would require a modification to the reading means which read the audio synchronization track so that it could function as the reader 24. The modification would allow the reading means to pass information from the audio synchronization track to the controller 26, which could then use the information received to synchronize the recovery of subtitle information and display of the subtitle 22 according to the same process used by the above-mentioned motion pictures.

In Line B of Figure 4, there is shown an alternative configuration of the film print 10 containing images 12 and non-image areas 14. The non-image areas 14 contain sprocket holes 16. In addition, a non-image area 32 not containing sprocket holes 16 contains an information track 34-2, which may be located near the beginning of the film print 10 and extends for only a short distance relative to the length of the film print 10.

The information track 34-2 may comprise codes established by the Society of Motion Picture and Television Engineers ("SMPTE time codes"). These SMPTE time codes are placed on film prints 10 near the beginning of the print, and currently are used for synchronization of the display of the images 12 with other events.

In operation, the information track 34-2 is detected and read by the reader 24, and the information contained therein is passed to the controller 26. The controller 26 uses the information from the information track 34-2 to synchronize an internal timer. The controller 26 then refers exclusively to the internal timer to determine the next subtitle 22 to be displayed. The information for each subtitle 22 stored on the memory device 28 may be indexed such that, when the internal timer reaches a count that corresponds to a count stored on the memory device 28 for the next information, the next information is recovered from the memory device 28 and correspondingly displayed by the projector means 30.

In Line C of Figure 4, there is shown another configuration of the film print 10 containing images 12 and non-image areas 14. One non-image area 14 contains sprocket holes 16. Positioned between sprocket holes 16 is a non-contiguous information track 34-3. The information track 34-3 extends substantially the entire length of the film print 10.

Such an information track 34-3 contained between sprocket holes 16 on a film print 10 may contain a digital representation of the audio soundtrack, as described in an article entitled "6 Channel Dolby Stereo Digital Sound Mastering and Transfer Using MO Disks" by Paul R. Goldberg of Dolby Laboratories, Inc., published in the 1994 Technical Digest Series Volume 10 from the Optical Data Storage Conference held May 16-18, 1994, in Dana Point, California, and incorporated herein by reference. Such an information track 34-3 was also used on the recent motion picture "Batman Returns."

In operation, the information track 34-3 is detected and read by the reader 24, and passed to the controller 26 to allow recovery and display of the information from the memory device 28 for the correct subtitle 22. The information for each subtitle 22 stored on the memory device 28 may be indexed by a representation of a unique bit pattern occurring on the information track 34-3 only when the particular subtitle 22 is to be displayed. The controller 26 compares each bit pattern from the information track 34-3 to the entire list of index patterns to determine whether and for which subtitle 22 to recover information from the memory device 28. Alternatively, the information for each subtitle 22 stored on the memory device 28 may be organized sequentially and indexed by a representation of a unique bit pattern occurring on the information track 34-3 only when the next subtitle 22 is to be displayed. The controller 26 compares each bit pattern from the information track 34-3 to the next index pattern to determine when to recover the next information from the memory device 28.

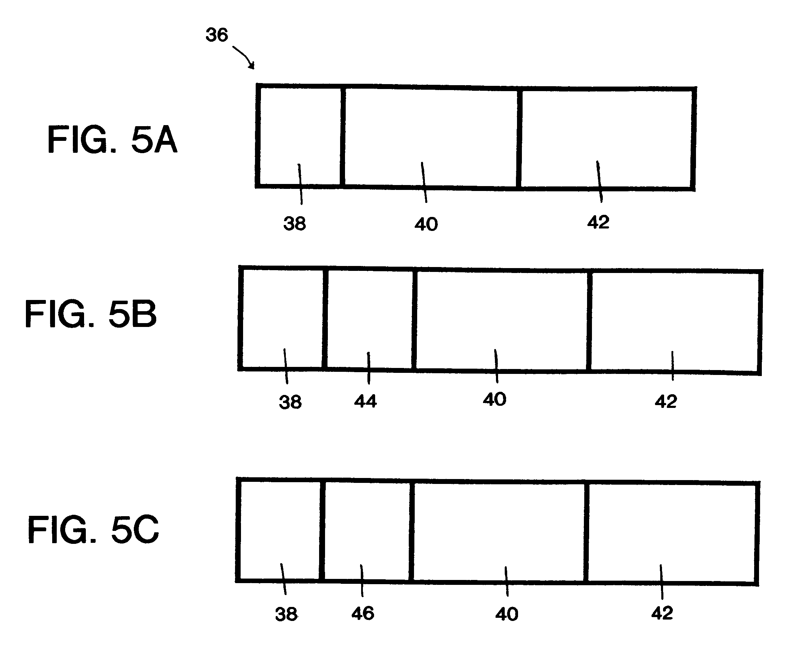

Referring to exemplary Figure 5, there are shown several configurations of the information stored on the memory device 28 corresponding to the subtitles 22 adaptable for use with the present invention. As shown in Line A of Figure 5, for each subtitle 22 to be displayed, an information entry 36 is stored on the memory device 28 in a form suitable for storage thereon and for retrieval, for interpretation by the controller 26, and for display by the projector means 30 with sufficient speed as to appear synchronized with the images 12. The information entry 36 comprises an index component 38, a content component 40, and an organization component 42.

In operation, the controller 26 compares the information recovered from the information track 34-1, 34-2, or 34-3 with the index component 38. Such information will have been decoded, if necessary, by a decoder (not shown) within the controller 26. If the information matches the index component 38, the controller 26 recovers the content component 40 and the organization component 42 and directs the projector means 30 to display the subtitle 22, which is formed from the content component 40 and the organization component 42. The controller 26 directs the projector means 30 to display the subtitle 22 until the information recovered from the information track 34-1, 34-2, or 34-3 matches the index component 38 of another information entry 36. At that time, the controller 26 directs the projector means 30 to display the subtitle 22 corresponding to the new matching information entry 36.

A content component 40 and an organization component 42 together comprise the information necessary for the controller 26 to direct the projector means 30 to display the correct subtitle 22 in the correct manner. The content component 40 may contain a representation of the characters to be generated, and the organization component 42 may contain information such as the size, font, and orientation of the characters to be generated. Alternatively, the content component 40 and the organization component 42 may be combined into a single component, containing information such as a bit-mapped representation of the subtitle 22 to be displayed.

In Line B of Figure 5, there is shown a second configuration for the information entry 36. In this configuration, the information entry 36 comprises the index component 38, the content component 40, and the organization component 42, as described in conjunction with Line A of Figure 5 above. In addition, the information entry 36 includes a duration component 44. The duration component 44 includes a representation of the length of time the subtitle 22 should be displayed. The duration component 44 may be measured in any form suitable for the controller 26, such as seconds, frames, or timer increments.

In operation, the controller 26 compares the information recovered from the information track 34-1, 34-2, or 34-3 with the index component 38. Such information will have been decoded, if necessary, by a decoder (not shown) within the controller 26. If the information matches the index component 38, the controller 26 recovers the content component 40 and the organization component 42 and directs the projector means 30 to display the subtitle 22, which is formed from the two components 40 and 42. The controller 26 also recovers the duration component 44, and continues to direct the projector means 30 to display the subtitle 22 until such duration has expired. At that time, if a new matching information entry 36 has not been found, the controller 26 directs the projector means 30 to display nothing. If a new matching information entry 36 has been found, the controller 26 directs the projector means 30 to display only the subtitle 22 corresponding to the new matching information entry 36.

In Line C of Figure 5, there is shown a third configuration for the information entry 36. This configuration of the information entry 36 comprises the index component 38, the content component 40, and the organization component 42, as described in conjunction with Line A of Figure 5 above. In addition, the information entry 36 includes a control component 46. The control component 46 directs the controller 26 whether to direct the projector means 30 to start displaying the subtitle 22 or to stop displaying the subtitle 22.

In operation, the controller 26 compares the information recovered from the information track 34-1, 34-2, or 34-3 with the index component 38. Such information will have been decoded, if necessary, by a decoder (not shown) within the controller 26. If the information matches the index component 38, the controller 26 recovers the content component 40 and the organization component 42. The controller 26 also recovers the control component 46. If the control component 46 contains a start code, the controller 26 directs the projector means 30 to start displaying the subtitle 22 contained in the content component 40 and the organization component 42. If the control component 46 contains a stop code, the controller 26 directs the projector means 30 to stop displaying the subtitle 22 contained in the content component 40 and the organization component 42. The beginning or ending of the display of the subtitle 22 will have no effect on the display of other subtitles 22, even the subtitles 22 are being displayed concurrently.

As will be apparent to one skilled in the art, in addition to the operation described above, the controller 26 may recover and store all the information for one or more information entries 36, and may then either compare or retrieve the components 38, 40, 42, 44, or 46 from this storage.

While the invention has been particularly shown and described with reference to a preferred embodiment and alterations thereto, it would be understood by those skilled in the art that various changes in form and detail may be made therein without departing from the spirit and scope of the invention.

## Claims

1. An apparatus for displaying subtitles during projection of a film print by a film projector, comprising:
a reader for detecting and reading coded information from the film print;
a memory device for storing the organisation and content information for the subtitles to be displayed;
a controller for recovering the organisation and content information for the subtitles from said memory device in response to the coded information read by said reader; and
projector means for displaying on a display screen the organisation and content information for the subtitles recovered from said memory device by said controller.

2. An apparatus as claimed in claim 1, wherein said reader is integral with the film projector.

3. An apparatus as claimed in claim 1 or claim 2, wherein said projector means comprises:
a slide projector; and
a slide containing liquid crystal arranged into elements each of which independently may selectively transmit, scatter, or absorb light from said slide projector in response to the organisation and content information for the subtitles recovered from said memory device by said controller.

4. An apparatus as claimed in any preceding claim, wherein:
said controller includes a video disc player; and
said memory device comprises a video disc.

5. An apparatus as claimed in any preceding claim wherein the coded information detected and recovered from the film print by said reader comprises an audio synchronisation track.

6. An apparatus as claimed in any of claims 1 to 4, wherein:
the coded information detected and recovered from the film print by said reader comprises encoded audio signals; and
said controller includes a decoder to decode the encoded audio signals for use in synchronising display of the subtitles with projection of the film print.

7. An apparatus as claimed in any of claims 1 to 4, wherein:
the coded information detected and recovered from the film print by said reader comprises time codes positioned near the beginning of the film print; and
said controller includes a timer which is synchronised with the time codes recovered from the film print and synchronises display of the subtitles with projection of the film print.

8. An apparatus as claimed in any one of claims 3 to 7 when dependent on claim 2, wherein:
said projector means comprises:
a slide projector; and
a slide containing liquid crystal arranged into elements each of which independently may selectively transmit, scatter, or absorb light from said slide projector in response to the organisation and content information for the subtitles recovered from said memory device by said controller;
said controller includes a video disc player; and
said memory device comprises a video disc.

9. An apparatus as claimed in any preceding claim, wherein said memory device stores a start code to direct said controller to begin displaying the subtitle to the displayed.

10. An apparatus as claimed in any preceding claim, wherein said memory device stores a duration code containing the length of time for said controller to direct said projector means to display the subtitle to be displayed.

11. An apparatus as claimed in any preceding claim, wherein said memory device stores a stop code to direct said controller to stop displaying the subtitle to be displayed.
